(19) Europäisches Patentamt
European Patent Office
Office européen des brevets

(11) **EP 3 077 264 B1**

(12) **FASCICULE DE BREVET EUROPEEN**

(45) Date de publication et mention
de la délivrance du brevet:
**07.02.2018  Bulletin 2018/06**

(21) Numéro de dépôt: **14821769.8**

(22) Date de dépôt: **02.12.2014**

(51) Int Cl.:
**B60W 40/13** *(2012.01)*

(86) Numéro de dépôt international:
**PCT/FR2014/053107**

(87) Numéro de publication internationale:
**WO 2015/082822 (11.06.2015 Gazette 2015/23)**

(54) **PROCÉDÉ ET DISPOSITIF D'ESTIMATION DE L'INTERVALLE DANS LEQUEL SE SITUE LA MASSE TOTALE D'UN VÉHICULE AUTOMOBILE**

VERFAHREN UND VORRICHTUNG ZUR SCHÄTZUNG DES INTERVALLS, DAS DAS GESAMTGEWICHT EINES KRAFTFAHRZEUGS ENTHÄLT

METHOD AND DEVICE FOR ESTIMATING THE INTERVAL WHICH CONTAINS THE TOTAL WEIGHT OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.12.2013  FR 1361998**

(43) Date de publication de la demande:
**12.10.2016  Bulletin 2016/41**

(73) Titulaire: **Renault S.A.S.**
**92100 Boulogne-Billancourt (FR)**

(72) Inventeurs:
• **PITA-GIL, Guillermo**
**F-75014 Paris (FR)**
• **GRANATO, Giovanni**
**F-92170 Vanves (FR)**

(56) Documents cités:
**EP-A1- 1 935 733          DE-A1-102005 062 282**
**DE-B3-102006 045 305     US-A1- 2004 181 317**
**US-A1- 2006 108 154       US-A1- 2011 172 877**

**Description**

La présente invention concerne un procédé et un dispositif d'estimation de la masse totale d'un véhicule automobile.

La connaissance de la masse totale d'un véhicule automobile est nécessaire au bon fonctionnement de nombreux dispositifs embarqués dans le véhicule, notamment les dispositifs de gestion de freinage, de gestion de boîte de vitesses automatique ou de gestion de la raideur des suspensions. En effet, plus le véhicule est chargé, plus les suspensions deviennent raides afin d'assurer le confort et la sécurité des personnes. Par ailleurs, pour les véhicules utilitaires offrant une capacité de chargement importante, une estimation de la masse du véhicule permet à l'utilisateur de garantir le respect du poids total en charge autorisé.

Il est donc souhaitable d'obtenir rapidement une estimation fiable de la masse du véhicule.

Aujourd'hui l'estimation de la masse d'un véhicule automobile peut se faire de différentes façons, par exemple par mesure directe de la masse à l'aide de capteurs de débattement des suspensions et à partir des connaissances des raideurs des amortissements. Toutefois, ces méthodes sont chères car elles nécessitent l'installation et le calibrage en usine de capteurs de débattement. De plus, la dispersion de fabrication et de vieillissement des raideurs des suspensions ne permet pas d'obtenir une estimation de la masse précise.

Il existe également des procédés d'estimation de la masse d'un véhicule automobile par application du principe fondamental de la dynamique.

On peut se référer à cet égard au document US 6, 249, 735 qui décrit un procédé d'estimation de l'état de chargement d'un véhicule en fonction du couple du moteur mesuré et de l'accélération du véhicule calculée par approximation discrète de la dérivée de la vitesse et par filtrage. Un tel procédé ne permet pas d'obtenir une estimation de la masse suffisamment fiable et robuste.

On peut également se référer au document FR 2 857 090 qui décrit un procédé d'estimation de la masse reposant sur un algorithme de moindres carrés récursifs en utilisant l'accélération du véhicule. Toutefois, un tel procédé d'estimation ne permet pas d'estimer rapidement la masse du véhicule automobile.

De plus, les procédés d'estimation de la masse d'un véhicule automobile par application du principe fondamental de la dynamique à un seul instant sont particulièrement imprécis et lourds à mettre en oeuvre car ils nécessitent une estimation de nombreux paramètres du véhicule et se basent sur des hypothèses qui ne sont pas toujours vérifiées, telles qu'une vitesse du vent nulle, une déclivité nulle, etc.

Par ailleurs, dans certains véhicules actuels, l'utilisateur doit appuyer sur un bouton de commande lorsque le véhicule est chargé. Le bouton de commande va ensuite activer un programme de pilotage du calculateur de la transmission automatique adaptée à un véhicule chargé ou non chargé, dit « nominal ». Toutefois, l'implantation d'un tel bouton de commande est relativement coûteuse.

Toutefois, aucun de ces documents ne permet, rapidement, de définir si le véhicule est peu ou très chargé, et donc de déterminer un intervalle donné de poids du véhicule, sans en déterminer la valeur exacte.

La présente invention a donc pour objet de remédier à ces inconvénients.

Le but de l'invention est donc de fournir un procédé et un dispositif permettant d'obtenir rapidement un intervalle dans lequel se situe la masse totale du véhicule automobile, tout en étant peu couteux et simple à mettre en oeuvre.

Par intervalle ou classe de masse, on entend une plage définie par un ensemble de masses encadrées par une masse maximale et une masse minimale.

Dans un mode de réalisation, l'invention concerne un procédé d'estimation de de la classe d'appartenance de la masse totale d'un véhicule automobile, c'est-à-dire de l'intervalle dans lequel se situe la masse totale d'un véhicule automobile. Le procédé d'estimation comprend une étape dans laquelle on définit au moins deux intervalles de masses, on détermine une première situation dans laquelle la masse totale du véhicule appartient au premier intervalle et une deuxième situation dans laquelle la masse totale du véhicule appartient au deuxième intervalle. Le procédé d'estimation comprend en outre une étape de calcul des probabilités de se trouver respectivement dans la première ou la deuxième situation en connaissant une valeur de la masse, une étape de calcul du risque de choisir le mauvais intervalle en fonction des probabilités calculées et du coût associé à une décision erronée et une étape de détermination de l'intervalle dans lequel se trouve la masse totale du véhicule en fonction du risque.

Avantageusement, pour calculer les probabilités de se trouver respectivement dans la première ou la deuxième situation en connaissant une valeur de la masse, on définit un ensemble d'estimation de masse à partir d'une base de données contenant des profils de roulage, on calcule la probabilité qu'une valeur de l'ensemble de masse se situe dans la première situation, on calcule la probabilité qu'une valeur de l'ensemble de masse se situe dans la deuxième situation, on détermine les probabilités d'être dans la première ou deuxième situation et on calcule la probabilité de trouver une valeur de masse dans toutes les situations pour tous les types de roulage.

On peut, par exemple, utiliser un algorithme utilisant le théorème de Bayes afin d'obtenir les probabilités de se trouver dans la première ou deuxième situation en connaissant une valeur de la masse.

Dans un mode de réalisation, le risque est calculé en fonction de la valeur de masse instantanée. La masse instantanée correspond à la somme des forces appliquées au véhicule divisée par l'accélération longitudinale du véhicule. Par forces, on entend la force aérodynamique, la force résistante de la route sur la roue, la résultante du couple moteur ramené à la roue et la trainée de freinage.

Dans un autre mode de réalisation, le risque est calculé en fonction de l'ensemble des valeurs estimées de masse instantanée, par exemple calculée à partir d'un algorithme utilisant la deuxième loi de Newton.

Avantageusement, on détermine l'intervalle dans lequel se trouve la masse totale du véhicule en comparant les risques et en choisissant le risque le plus faible.

Selon un second aspect, l'invention concerne un dispositif d'estimation de l'intervalle dans lequel se situe la masse totale d'un véhicule automobile, comprenant un module de détermination d'au moins deux intervalles de masses, d'une première situation dans laquelle la masse totale du véhicule appartient au premier intervalle et d'une deuxième situation dans laquelle la masse totale du véhicule appartient au deuxième intervalle. Ledit dispositif d'estimation comprend un module de calcul des probabilités de se trouver dans la première ou deuxième situation en connaissant une valeur de la masse, un module de calcul du risque de choisir le mauvais intervalle en fonction des probabilités calculées et du coût associé à une décision erronée et un module de détermination de l'intervalle dans lequel se trouve la masse totale du véhicule en fonction du risque.

Avantageusement, le module de calcul des probabilités comprend un module de détermination d'un ensemble d'estimation de masse à partir d'une base de données contenant des profils de roulage et un module de calcul apte à calculer la probabilité qu'une valeur de l'ensemble de masse se situe dans la première situation, la probabilité qu'une valeur de l'ensemble de masse se situe dans la deuxième situation, les probabilités d'être dans la première ou deuxième situation et la probabilité de trouver une valeur de masse dans toutes les situations pour tous les types de roulage.

Le module de calcul des probabilités de se trouver dans la première ou deuxième situation en connaissant une valeur de la masse comprend, par exemple, un module d'application d'un algorithme utilisant le théorème de Bayes.

Dans un mode de réalisation, le risque est calculé en fonction de l'ensemble des valeurs estimées de masse instantanée.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 représente schématiquement le dispositif d'estimation de la classe d'appartenance de la masse totale d'un véhicule selon l'invention; et
- la figure 2 illustre les étapes du procédé d'estimation de la classe d'appartenance de la masse totale d'un véhicule selon l'invention.

L'invention permet de déterminer la classe d'appartenance de la masse d'un véhicule automobile, c'est-à-dire dans quelle classe de masse appartient la masse du véhicule. Une classe de masse est un intervalle de masses, par exemple comprises entre 1900 kg et 2000 kg.

Dans la suite, on définit un premier intervalle de masses $I_1$, par exemple entre 0 kg et 1850kg, et un deuxième intervalle de masses $I_2$, par exemple entre 1850 kg et 3000kg. On notera que l'on pourrait prévoir un nombre supérieur d'intervalles de masses et des intervalles de masses plus ou moins grands.

On définit ainsi une première situation $M_{I_1}$, correspondant au cas où la masse totale m du véhicule se situe dans l'intervalle $I_1$, et une deuxième situation $M_{I_2}$ correspondant au cas où la masse $m$ du véhicule se situe dans l'intervalle $I_2$.

Le dispositif d'estimation 1 de la classe d'appartenance de la masse m du véhicule comprend un module 2 de définition des intervalles de masses $I_1$, $I_2$ et des situations $M_{I_1}$ et $M_{I_2}$, un module 5 de calcul de probabilités conditionnelles, un module 8 d'estimation du risque de se tromper et un module 9 de prise de décision.

Le module 5 de calcul de probabilités conditionnelles comporte un module 3 de détermination, à l'aide d'une base de données 4 contenant des profils de roulage, d'un ensemble d'estimations de masse m_#.

Le module de détermination 3 comprend un algorithme utilisant la deuxième loi de Newton afin de calculer théoriquement, en fonction des données de roulage, les estimations de masses instantanées du véhicule selon l'équation suivante :

$$\bar{m} = \frac{\sum F(t)}{a(t)} \qquad \textbf{(Eq. 1)}$$

Avec :

m, la masse instantanée théorique du véhicule, exprimé en kg ;

$\alpha$(t), l'accélération instantanée du véhicule, exprimée en m.s$^{-2}$ ; et

F(t), l'ensemble de forces instantanées appliquées sur le véhicule, exprimé en N.

On obtient ainsi un ensemble d'estimations de masse m_# pour un roulage donné en fonction de la situation dans laquelle on se trouve, c'est-à-dire pour la première situation $M_{I1}$ correspondant au cas où la masse m du véhicule se situe dans l'intervalle $I_1$, et pour la deuxième situation $M_{I2}$ correspondant au cas où la masse m du véhicule se situe dans l'intervalle $I_2$.

Le module 5 de calcul de probabilités conditionnelles comporte ensuite un module de calcul 6 de l'ensemble des probabilités conditionnelles $P(x|M_{I1})$ d'une valeur de masse x dans l'ensemble d'estimation de masse m_# dans la première situation $M_{I1}$ selon l'équation suivante:

$$P(x|M_{I1}) \; = \; N(x) \; / \; N(m\_\#) \qquad \textbf{(Eq. 2)}$$

Avec :

$N(x)$, le nombre de fois que la valeur x est dans l'ensemble m_# ; et

$N(m\_\#)$, le nombre total d'éléments dans l'ensemble $m\_\#$.

De manière identique, le module de calcul 6 calcule l'ensemble des probabilités conditionnelles $P(x|M_{I2})$ d'une valeur de masse x dans l'ensemble d'estimation de masse m_# dans la deuxième situation $M_{I2}$.

Ensuite, le module de calcul 6 détermine les probabilités $P(M_{I1})$ et $P(M_{I2})$ d'être dans la première ou deuxième situation $M_{I1}$ ou $M_{I2}$.

Par exemple, les probabilités $P(M_{I1})$ et $P(M_{I2})$ peuvent être fournies par le constructeur en fonction du véhicule et en fonction du chargement, par exemple avec une pluralité d'individus ou avec des marchandises, etc....

Avec ces informations, le module de calcul 6 détermine la probabilité de trouver une valeur de masse x dans toutes les situations de roulage $M_{I1}$ et $M_{I2}$ :

$$P(x) \; = \; P(x|M_{I1}) * P(M_{I1}) \; + \; P(x|M_{I2}) \; * \; P(M_{I2}) \;\textbf{(Eq.3)}$$

Afin de connaître la probabilité de se trouver dans la situation $M_{I1}$ ou $M_{I2}$ en connaissant une valeur de masse x, le module 5 de calcul de probabilités conditionnelles comporte un module 7 contenant un algorithme utilisant le théorème de Bayes afin d'obtenir les équations suivantes :

$$P(M_{I1}|x) \; = \; P(x|M_{I1}) \; * \; P(M_{I1}) \; / \; P(x) \qquad \textbf{(Eq.4)}$$

$$P(M_{I2}|x) \; = \; P(x|M_{I2}) \; * \; P(M_{I2}) \; / \; P(x) \qquad \textbf{(Eq.5)}$$

Les probabilités conditionnelles $P(M_{I1}|x)$ et $P(M_{I2}|x)$ permettent de répondre la question suivante : étant donnée une valeur quelconque de masse m, quelle est la probabilité que le véhicule soit dans la situation $M_{I1}$ ou $M_{I2}$ ? Ces probabilités conditionnelles sont calculées hors ligne et sont envoyées au module 9 de prise de décision. On entend par « hors ligne », les phases de roulage lors du développement et de la mise au point.

Le module 8 d'estimation du risque de se tromper R reçoit des informations sur le coût C et sur la probabilité conditionnelle calculée par le module de calcul des probabilités 5.

Le choix erroné d'une situation $M_{In}$ alors que la masse m du véhicule se trouve dans un intervalle $I_{n+1}$ entraine un coût C qui peut engendrer la dégradation du confort et de la sécurité de l'utilisateur.

On notera $C_{I1}$, le coût de se tromper en choisissant la situation $M_{I1}$ alors que la masse m du véhicule se trouve dans l'intervalle $I_2$ et $C_{I2}$, le coût de se tromper en choisissant la situation $M_{I2}$ alors que la masse m du véhicule se trouve dans l'intervalle $I_1$.

Le risque R d'un événement est défini comme étant son coût C multiplié par la probabilité de la survenue de cet événement.

On peut calculer le risque R de deux méthodes différentes:

La première méthode consiste à calculer le risque instantané R en connaissant la valeur de la masse instantanée $m\_t$ selon les équations suivantes.

$$R_{I2} = P(M_{I1}|m\_t) * C_{I2} \qquad\qquad \textbf{(Eq.6)}$$

$$R_{I1} = P(M_{I2}|m\_t) * C_{I1} \qquad\qquad \textbf{(Eq.7)}$$

La deuxième méthode utilise les valeurs d'estimation de la masse $m\_t, m\_t\text{-}1, m\_t\text{-}2, ..., m\_1$ déterminées par un algorithme utilisant la loi de Newton à chaque instant $t, t\text{-}1, t\text{-}2....$ On notera que l'on pourrait utiliser tout autre algorithme permettant d'estimer la masse du véhicule.

On peut définir :

$$Xt = \{m\_t, m\_t\text{-}1, m\_t\text{-}2, ..., m\_1\}.$$

Avec $Xt$, l'ensemble des estimations de la masse m du véhicule.

Afin de calculer la probabilité $P(M|Xt)$ de se trouver dans la situation $M_{I1}$ ou $M_{I2}$ en connaissant l'ensemble $Xt$, nous faisons l'hypothèse que les valeurs dans l'ensemble $Xt$ sont des valeurs aléatoires, tirées au hasard dans les mêmes conditions, c'est-à-dire identiquement distribuées et indépendantes :

$$P(M|X_t) = \frac{1}{P(M)^{t-1}} \prod_{j=1}^{t} P(M|m_j) \qquad\qquad \textbf{(Eq.8)}$$

L'équation 8 peut s'écrire sous une forme récursive :

$$P(M|X_t) = \frac{P(M|m_t)}{P(M)} P(M|X_{t-1}) \qquad\qquad \textbf{(Eq.9)}$$

Ainsi, à l'instant t, le risque R de conclure que la masse se trouve dans un intervalle $I$ alors qu'elle ne l'est pas s'écrit selon les équations suivantes :

$$R_{I2} = P(M_{I1}|Xt) * C_{I2} \qquad\qquad \textbf{(Eq.10)}$$

$$R_{I1} = P(M_{I2}|Xt) * C_{I1} \qquad\qquad \textbf{(Eq.11)}$$

Ce risque est mis à jour à chaque instant t.

Les risques $R_{I2}$ et $R_{I1}$ sont transmis au module 9 de prise de décision. Le module 9 de prise de décision compare les risques calculés par le module de détermination des risques 8 et sélectionne le risque le plus faible afin de déterminer dans quel intervalle $I_1$ ou $I_2$ se situe la masse totale m du véhicule automobile.

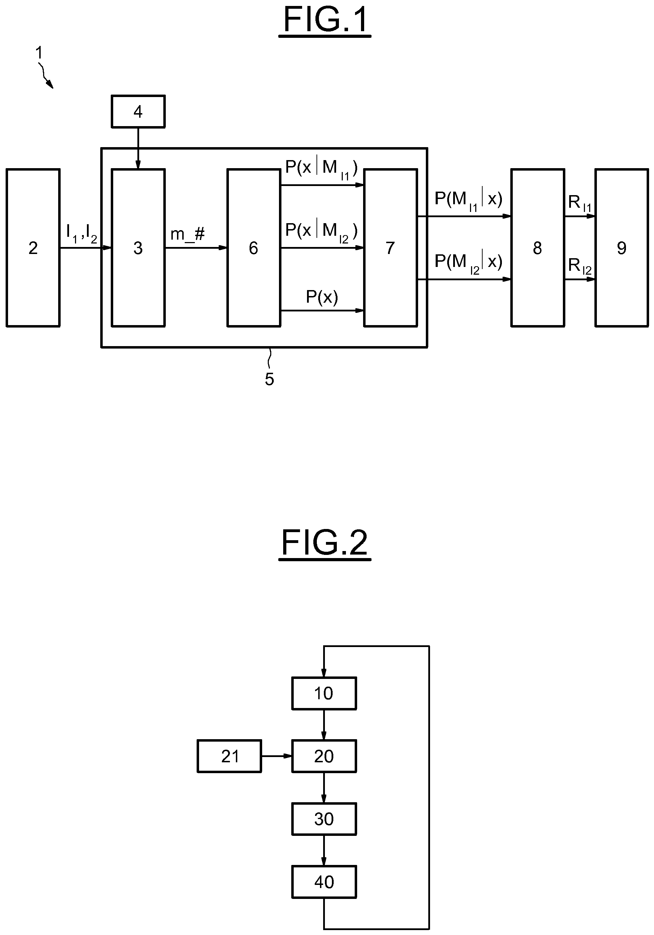

Tel qu'illustré sur la figure 2, le procédé d'estimation de la classe d'appartenance de la masse m du véhicule comprend quatre étapes principales 10, 20, 30, 40 : une première étape principale 10 de définition des intervalles de masses $I_1, I_2$ et des situations $M_{I1}$ et $M_{I2}$, une deuxième étape principale 20 de calcul de probabilités conditionnelles, une troisième étape principale 30 d'estimation du risque de se tromper et une quatrième étape 40 de prise de décision.

La deuxième étape principale 20 de calcul de probabilités conditionnelles comporte une étape de détermination, à l'aide d'une base de données 21 contenant des profils de roulage, d'un ensemble d'estimations de masse $m\_\#$.

On peut utiliser par exemple un algorithme utilisant la loi de Newton afin de calculer théoriquement les estimations de masses instantanées du véhicule selon l'équation 1 définie en référence à la figure 1.

On obtient ainsi un ensemble d'estimations de masse $m\_\#$ pour un roulage donné en fonction de la situation dans laquelle on se trouve, c'est-à-dire pour la première situation $M_{I1}$ correspondant au cas où la masse m du véhicule se situe dans l'intervalle $I_1$, et pour la deuxième situation $M_{I2}$ correspondant au cas où la masse m du véhicule se situe dans l'intervalle $I_2$.

On calcule ensuite l'ensemble des probabilités conditionnelles $P(x|M_{I1})$ d'une valeur de masse x dans l'ensemble d'estimation de masse $m\_\#$ dans la première situation $M_{I1}$ selon l'équation suivante:

$$P(x|M_{I1}) = N(x) / N(m\_\#) \qquad \textbf{(Eq. 2)}$$

Avec :

$N(x)$, le nombre de fois que la valeur x est dans l'ensemble $m\_\#$ ; et
$N(m\_\#)$, le nombre total d'éléments dans l'ensemble $m\_\#$.

De manière identique, on calcule l'ensemble des probabilités conditionnelles $P(x|M_{I2})$ d'une valeur de masse x dans l'ensemble d'estimation de masse $m\_\#$ dans la deuxième situation $M_{I2}$.
Ensuite, on calcule les probabilités $P(M_{I1})$ et $P(M_{I2})$ d'être dans la première ou deuxième situation $M_{I1}$ ou $M_{I2}$.
Par exemple, les probabilités $P(M_{I1})$ et $P(M_{I2})$ peuvent être fournie par le constructeur en fonction du véhicule et en fonction du chargement, par exemple avec une pluralité d'individus ou avec des marchandises, etc....
Avec ces informations, on calcule la probabilité de trouver une valeur de masse x dans toutes les situations de roulage $M_{I1}$ et $M_{I2}$ :

$$P(x) = P(x|M_{I1}) * P(M_{I1}) + P(x|M_{I2}) * P(M_{I2}) \ \textbf{(Eq.3)}$$

Afin de connaitre la probabilité de se trouver dans la situation $M_{I1}$ ou $M_{I2}$ en connaissant une valeur de masse x, on applique la formule de Bayes afin d'obtenir les équations suivantes :

$$P(M_{I1}|x) = P(x|M_{I1}) * P(M_{I1}) / P(x) \qquad \textbf{(Eq.4)}$$

$$P(M_{I2}|x) = P(x|M_{I2}) * P(M_{I2}) / P(x) \qquad \textbf{(Eq.5)}$$

Les probabilités conditionnelles $P(M_{I1}|x)$ et $P(M_{I2}|x)$ permettent de répondre la question suivante : étant donnée une valeur quelconque de masse m, quelle est la probabilité que le véhicule soit dans la condition $M_{I1}$ ou $M_{I2}$. Ces probabilités conditionnelles sont calculées hors ligne et sont envoyées à l'étape 30 de prise de décision.
La troisième étape principale 30 d'estimation du risque R permet de calculer le risque de choisir une situation alors que la masse totale du véhicule se trouve dans un autre intervalle de masse.
Le choix erroné d'une situation $M_{In}$ alors que la masse m du véhicule se trouve dans l'intervalle $I_{n+1}$ entraine un coût $C$ qui peut engendrer la dégradation du confort et de la sécurité de l'utilisateur.
On notera $C_{I1}$, le coût de se tromper en choisissant la situation $I_1$ alors que la masse m du véhicule se trouve dans l'intervalle $I_2$ et $C_{I2}$, le coût de se tromper en choisissant la situation $I_2$ alors que la masse m du véhicule se trouve dans l'intervalle $I_1$.
Le risque $R$ d'un événement est défini comme étant son coût $C$ multiplié par la probabilité de la survenue de cet événement.
On peut calculer le risque $R$ de deux méthodes :

La première méthode consiste à calculer le risque instantané R en connaissant la valeur de la masse instantanée $m\_t$ selon les équations suivantes.

$$R_{I2} = P(M_{I1}|m\_t) * C_{I2} \qquad \textbf{(Eq.6)}$$

$$R_{I1} = P(M_{I2}|m\_t) * C_{I1} \qquad \textbf{(Eq.7)}$$

La deuxième méthode permet d'utiliser les valeurs d'estimation de la masse $m\_t, m\_t\text{-}1, m\_t\text{-}2, ..., m\_1$ déterminées par un algorithme utilisant la loi de Newton à chaque instant $t$. On notera que l'on pourrait utiliser tout autre algorithme permettant d'estimer la masse du véhicule.

On peut définir :

$$Xt = \{m\_t,\ m\_t\text{-}1,\ m\_t\text{-}2,\ ...,\ m\_1\}.$$

Avec *Xt,* l'ensemble des estimations de la masse du véhicule.

Afin de calculer la probabilité *P(M|Xt)* d'être dans la situation $M_{l1}$ ou $M_{l2}$ en connaissant l'ensemble *Xt,* nous faisons l'hypothèse que les valeurs dans l'ensemble *Xt* sont des valeurs aléatoires, tirées au hasard dans les mêmes conditions, c'est-à-dire identiquement distribuées et indépendantes :

$$P(M|X_t) = \frac{1}{P(M)^{t-1}} \prod_{j=1}^{t} P(M|m_j) \qquad \textbf{(Eq.8)}$$

L'équation 8 peut s'écrire sous une forme récursive :

$$P(M|X_t) = \frac{P(M|m_t)}{P(M)} P(M|X_{t-1}) \qquad \textbf{(Eq.9)}$$

Ainsi, à l'instant *t* le risque *R* de conclure que la masse se trouve dans un intervalle *I* alors qu'elle ne l'est pas s'écrit selon les équations suivantes :

$$R_{I2} = P(M_{I1}|Xt) * C_{I2} \qquad \textbf{(Eq.10)}$$

$$R_{I1} = P(M_{I2}|Xt) * C_{I1} \qquad \textbf{(Eq.11)}$$

Ce risque est mis à jour à chaque instant t.

En possession de cette information nous pouvons prendre la décision de moindre risque à la quatrième étape 40 en comparant les risques $R_{I1}$ et $R_{I2}$.

L'étape de prise de décision consiste à choisir la solution qui minimise le risque, c'est-à-dire que l'on choisit la classe de masse associée au risque le plus faible.

Ainsi, il est possible de connaitre la plage dans laquelle se situe la masse totale du véhicule de manière fiable.

Dès lors, il peut être prévu d'avoir une estimation très rapide de la classe d'appartenance de la masse du véhicule, au détriment de la précision, par exemple avec simplement deux ou trois classes d'appartenance. Les systèmes à amortisseurs pilotés (réglage plus ou moins ferme selon la charge du véhicule) ainsi que les systèmes d'éclairage (orientation du faisceau adapté à la charge afin de ne pas éblouir les autres véhicules ou les piétons), ne nécessitent pas une grande précision sur la masse du véhicule.

D'autres applications nécessitent une estimation plus précise et donc plus de classes d'appartenance de la masse du véhicule que la situation précédente. On peut citer notamment les systèmes de détection de surcharge du véhicule. Dans ce cas, le nombre de classes de masse peut être d'autant plus grand que la précision souhaitée est importante, au détriment du temps nécessaire à une telle estimation.

Les deux situations peuvent être envisagées au sein d'un même véhicule, en partant de deux classes d'appartenance, ce qui permet d'effectuer des premiers réglages de différents systèmes, puis en affinant l'estimation de la masse par augmentation du nombre de classes.

## Revendications

**1.** Procédé d'estimation de l'intervalle dans lequel se situe la masse totale (*m*) d'un véhicule automobile, dans lequel on définit au moins deux intervalles de masses ($I_1$, $I_2$), on détermine une première situation ($M_{I1}$) dans laquelle la masse totale *(m)* du véhicule appartient au premier intervalle ($I_1$) et une deuxième situation ($M_{I2}$) dans laquelle la masse totale *(m)* du véhicule appartient au deuxième intervalle ($I_2$), on calcule les probabilités ($P(M_{I1}|x)$, $P(M_{I2}|x)$) de se trouver dans la première ou deuxième situation ($M_{I1}$, $M_{I2}$) en connaissant une valeur *(x)* de la masse, on calcule le risque ($R_{I1}$, $R_{I2}$) de choisir le mauvais intervalle ($I_1$, $I_2$) en fonction des probabilités calculées et du coût ($C_{I1}$, $C_{I2}$) associé à une décision erronée et on détermine l'intervalle ($I_1$, $I_2$) dans lequel se trouve la masse totale

*(m) du véhicule en fonction du risque ($R_{I1}$, $R_{I2}$).*

**2.** Procédé d'estimation selon la revendication 1, dans lequel pour calculer les probabilités ($PM_{I1}|x$), P($M_{I2}|x$)), on définit un ensemble d'estimation de masse (*m_#*) à partir d'une base de données contenant des profils de roulage, on calcule la probabilité (*P(x|M_{I1})*) qu'une valeur *(x)* de l'ensemble de masse (*m_#*) se situe dans la première situation (*M_{I1}*), on calcule la probabilité (*P(x|M_{I2})*) qu'une valeur *(x)* de l'ensemble de masse (*m_#*) se situe dans la deuxième situation (*M_{I2}*), on détermine les probabilités (*P(M_{I1})*, (*P(M_{I2})*)) d'être dans la première ou deuxième situation (*M_{I1}*, *M_{I2}*) et on calcule la probabilité (*P(x)*) de trouver une valeur *(x)* de masse dans toutes les situations pour tous les types de roulage.

**3.** Procédé d'estimation selon la revendication 2, dans lequel on utilise un algorithme utilisant le théorème de Bayes afin d'obtenir les probabilités (*P(M_{I1}|x), P(M_{I2}|x)*) de se trouver dans la première ou deuxième situation (*M_{I1}, M_{I2}*) en connaissant une valeur *(x)* de la masse.

**4.** Procédé d'estimation selon l'une quelconque des revendications précédentes, dans lequel le risque ($R_{I1}$, $R_{I2}$) est calculé en fonction de la valeur de masse instantanée (*m_t*).

**5.** Procédé d'estimation selon l'une quelconque des revendications 1 à 3, dans lequel le risque ($R_{I1}$, $R_{I2}$) est calculé en fonction de l'ensemble (*Xt*) des valeurs estimées de masse instantanée (*m_t, m_t-1, m_t-2...*).

**6.** Procédé d'estimation selon l'une quelconque des revendications précédentes, dans lequel on détermine l'intervalle ($I_1$, $I_2$) dans lequel se trouve la masse totale (*m*) du véhicule en comparant les risques ($R_{I1}$, $R_{I2}$) et en choisissant le risque ($R_{I1}$, $R_{I2}$) le plus faible.

**7.** Dispositif d'estimation de l'intervalle dans lequel se situe la masse totale (*m*) d'un véhicule automobile, comprenant un module (2) de détermination d'au moins deux intervalles de masses ($I_1$, $I_2$), d'une première situation (*M_{I1}*) dans laquelle la masse totale (*m*) du véhicule appartient au premier intervalle ($I_1$) et d'une deuxième situation (*M_{I2}*) dans laquelle la masse totale (m) du véhicule appartient au deuxième intervalle ($I_2$), ledit dispositif d'estimation comprenant un module de calcul (5) des probabilités (*P(M_{I1}|x), P(M_{I2}|x)*) de se trouver dans la première ou deuxième situation (*M_{I1}, M_{I2}*) en connaissant une valeur (*x*) de la masse, un module de calcul (8) du risque ($R_{I1}$, $R_{I2}$) de choisir le mauvais intervalle ($I_1$, $I_2$) en fonction des probabilités calculées et du coût ($C_{I1}$, $C_{I2}$) associé à une décision erronée et un module de détermination (9) de l'intervalle ($I_1$, $I_2$) dans lequel se trouve la masse totale (*m*) du véhicule en fonction du risque ($R_{I1}$, $R_{I2}$).

**8.** Dispositif d'estimation selon la revendication 7, dans lequel le module de calcul (5) des probabilités (*P(M_{I1}|x)*, *P(M_{I2}|x)*) comprend un module de détermination (3) d'un ensemble d'estimation de masse (*m_#*) à partir d'une base de données (4) contenant des profils de roulage et un module de calcul (6) apte à calculer la probabilité (*P(x|M_{I1})*) qu'une valeur (*x*) de l'ensemble de masse (*m_#*) se situe dans la première situation (*M_{I1}*), la probabilité (*P(x|M_{I2})*) qu'une valeur (*x*) de l'ensemble de masse (*m_#*) se situe dans la deuxième situation (*M_{I2}*), les probabilités (*P(M_{I1})*, (*P(M_{I2})*)) d'être dans la première ou deuxième situation (*M_{I1}, M_{I2}*) et la probabilité (*P(x)*) de trouver une valeur (*x*) de masse dans toutes les situations pour tous les types de roulage.

**9.** Dispositif d'estimation selon la revendication 8, dans lequel le module de calcul (5) des probabilités (*P(M_{I1}|x), P(M_{I2}|x)*) comprend un module d'application (7) d'un algorithme utilisant le théorème de Bayes.

**10.** Dispositif d'estimation selon l'une quelconque des revendications 7 à 9, dans lequel le risque ($R_{I1}$, $R_{I2}$) est calculé en fonction de l'ensemble (*Xt*) des valeurs estimées de masse instantanée (*m_t, m_t-1, m_t-2...*).

**Patentansprüche**

**1.** Verfahren zur Schätzung des Intervalls, in dem sich die Gesamtmasse (m) eines Kraftfahrzeugs befindet, bei dem mindestens zwei Masseninterwalle ($I_1$, $I_2$) definiert werden, eine erste Situation ($M_{I1}$), in der die Gesamtmasse (m) des Fahrzeugs dem ersten Intervall ($I_1$) angehört, und eine zweite Situation ($M_{I2}$), in der die Gesamtmasse (m) des Fahrzeugs dem zweiten Intervall ($I_2$) angehört, bestimmt werden, die Wahrscheinlichkeiten (P($M_{I1}$/x), P($M_{I2}$/x)), sich in der ersten oder zweiten Situation ($M_{I1}$, $M_{I2}$) zu befinden, bei Kenntnis eines Werts (x) der Masse, berechnet werden, die Gefahr ($R_{I1}$, $R_{I2}$), das falsche Intervall ($I_1$, $I_2$) zu wählen, in Abhängigkeit von den berechneten Wahrscheinlichkeiten und den mit einer falschen Entscheidung verbundenen Kosten ($C_{I1}$, $C_{I2}$) berechnet wird, und das

Intervall ($I_1$, $I_2$), in dem sich die Gesamtmasse (m) des Fahrzeugs befindet, in Abhängigkeit von der Gefahr ($R_{I1}$, $R_{I2}$) bestimmt wird.

2. Schätzverfahren nach Anspruch 1, bei dem zur Berechnung der Wahrscheinlichkeiten ($P(M_{I1}/x)$, $P(M_{I2}/x)$) eine Gesamtheit einer Massenschätzung (m_#) aus einer Datenbasis, die Fahrprofile enthält, definiert wird, die Wahrscheinlichkeit ($P(x/M_{I1})$), dass sich ein Wert (x) der Massengesamtheit (m_#) in der ersten Situation ($M_{I1}$) befindet, berechnet wird, die Wahrscheinlichkeit ($P(x/M_{I2})$), dass sich ein Wert (x) der Massengesamtheit (m_#) in der zweiten Situation ($M_{I2}$) befindet, berechnet wird, die Wahrscheinlichkeiten ($P(M_{I1})$, ($P(M_{I2})$)), in der ersten oder zweiten Situation ($M_{I1}$, $M_{I2}$) zu sein, bestimmt werden, und die Wahrscheinlichkeit (P(x)), einen Massenwert (x) in allen Situationen für alle Fahrtypen zu finden, berechnet wird.

3. Schätzverfahren nach Anspruch 2, bei dem ein Algorithmus verwendet wird, der das Bayes-Theorem verwendet, um die Wahrscheinlichkeiten ($P(M_{I1}/x)$, $P(M_{I2}/x)$), sich in der ersten oder zweiten Situation ($M_{I1}$, $M_{I2}$) zu befinden, bei Kenntnis eines Werts (x) der Masse zu erhalten.

4. Schätzverfahren nach einem der vorhergehenden Ansprüche, bei dem die Gefahr ($R_{I1}$, $R_{I2}$) in Abhängigkeit vom momentanen Massenwert (m_t) berechnet wird.

5. Schätzverfahren nach einem der Ansprüche 1 bis 3, bei dem die Gefahr ($R_{I1}$, $R_{I2}$) in Abhängigkeit von der Gesamtheit (Xt) der geschätzten Werte einer momentanen Masse (m_t, m_t-1, m_t-2, ...) berechnet wird.

6. Schätzverfahren nach einem der vorhergehenden Ansprüche, bei dem das Intervall ($I_1$, $I_2$) bestimmt wird, in dem sich die Gesamtmasse (m) des Fahrzeugs befindet, wobei die Gefahren ($R_{I1}$, $R_{I2}$) verglichen werden und die geringste Gefahr ($R_{I1}$, $R_{I2}$) gewählt wird.

7. Vorrichtung zur Schätzung des Intervalls, in dem sich die Gesamtmasse (m) eines Kraftfahrzeugs befindet, umfassend ein Modul (2) zur Bestimmung mindestens zweier Massenintervalle ($I_1$, $I_2$), einer ersten Situation ($M_{I1}$), in der die Gesamtmasse (m) des Fahrzeugs dem ersten Intervall ($I_1$) angehört, und einer zweiten Situation ($M_{I2}$), in der die Gesamtmasse (m) des Fahrzeugs dem zweiten Intervall ($I_2$) angehört, wobei die Schätzvorrichtung ein Modul (5) zur Berechnung der Wahrscheinlichkeiten ($P(M_{I1}/x)$, $P(M_{I2}/x)$), sich in der ersten oder zweiten Situation ($M_{I1}$, $M_{I2}$) zu befinden, bei Kenntnis eines Werts (x) der Masse, ein Modul (8) zur Berechnung der Gefahr ($R_{I1}$, $R_{I2}$), das falsche Intervall ($I_1$, $I_2$) zu wählen, in Abhängigkeit von den berechneten Wahrscheinlichkeiten und den mit einer falschen Entscheidung verbundenen Kosten ($C_{I1}$, $C_{I2}$) und ein Modul (9) zur Bestimmung des Intervalls ($I_1$, $I_2$), in dem sich die Gesamtmasse (m) des Fahrzeugs befindet, in Abhängigkeit von der Gefahr ($R_{I1}$, $R_{I2}$) umfasst.

8. Schätzvorrichtung nach Anspruch 7, bei der das Modul (5) zur Berechnung der Wahrscheinlichkeiten ($P(M_{I1}/x)$, $P(M_{I2}/x)$) ein Modul (3) zur Bestimmung einer Gesamtheit einer Massenschätzung (m_#) aus einer Datenbasis (4), die Fahrprofile enthält und ein Modul (6) zur Berechnung, das dafür geeignet ist, die Wahrscheinlichkeit ($P(x/M_{I1})$), dass sich ein Wert (x) der Massengesamtheit (m_#) in der ersten Situation ($M_{I1}$) befindet, die Wahrscheinlichkeit ($P(x/M_{I2})$), dass sich ein Wert (x) der Massengesamtheit (m_#) in der zweiten Situation ($M_{I2}$) befindet, die Wahrscheinlichkeiten ($P(M_{I1})$, ($P(M_{I2})$)), in der ersten oder zweiten Situation ($M_{I1}$, $M_{I2}$) zu sein, und die Wahrscheinlichkeit (P(x)), einen Massenwert (x) in allen Situationen für alle Fahrtypen zu finden, zu berechnen, umfasst.

9. Schätzvorrichtung nach Anspruch 8, bei der das Modul (5) zur Berechnung der Wahrscheinlichkeiten ($P(M_{I1}/x)$, $P(M_{I2}/x)$) ein Modul (7) zur Anwendung eines Algorithmus, der das Bayes-Theorem verwendet, umfasst.

10. Schätzvorrichtung nach einem der Ansprüche 7 bis 9, bei der die Gefahr ($R_{I1}$, $R_{I2}$) in Abhängigkeit von der Gesamtheit (Xt) der geschätzten Werte einer momentanen Masse (m_t, m_t-1, m_1-2,...) berechnet wird.

**Claims**

1. Method for estimating the interval within which the total weight (*m*) of an automobile vehicle is situated, in which at least two intervals of weights ($I_1$, $I_2$) are defined, a first situation ($M_{I1}$) in which the total weight (*m*) of the vehicle belongs to the first interval ($I_1$) and a second situation ($M_{I2}$) in which the total weight (*m*) of the vehicle belongs to the second interval ($I_2$) are determined, the probabilities ($P(M_{I1}|x)$, $P(M_{I2}|x)$) of being in the first or second situation ($M_{I1}$, $M_{I2}$) are calculated knowing a value (*x*) of the weight, the risk ($R_{I1}$, $R_{I2}$) of choosing the wrong interval ($I_1$, $I_2$) is calculated as a function of the calculated probabilities and of the cost ($C_{I1}$, $C_{I2}$) associated with an erroneous decision and the interval ($I_1$, $I_2$) within which the total weight ($m$) of the vehicle is situated is determined as a function of the risk ($R_{I1}$, $R_{I2}$).

2. Estimation method according to Claim 1, in which, for calculating the probabilities ($P(M_{I1}|x)$, $P(M_{I2}|x)$), a set of estimations of weight ($m\_\#$) is defined using a database containing driving profiles, the probability ($P(x|M_{I1})$) that a value (x) from the set of weights ($m\_\#$) is situated in the first situation ($M_{I1}$) is calculated, the probability ($P(x|M_{I2})$) that a value (x) from the set of weights ($m\_\#$) is situated in the second situation ($M_{I2}$) is calculated, the probabilities ($P(M_{I1})$, ($P(M_{I2})$)) of being in the first or second situation ($M_{I1}$, $M_{I2}$) are determined and the probability ($P(x)$) of finding a value (x) of weight in all the situations for all the types of driving is calculated.

3. Estimation method according to Claim 2, in which an algorithm is used based on the Bayes theorem in order to obtain the probabilities ($P(M_{I1}|x)$, $P(M_{I2}|x)$) of being in the first or second situation ($M_{I1}$, $M_{I2}$) knowing a value (x) of the weight.

4. Estimation method according to any one of the preceding claims, in which the risk ($R_{I1}$, $R_{I2}$) is calculated as a function of the value of instantaneous mass ($m\_t$).

5. Estimation method according to any one of Claims 1 to 3, in which the risk ($R_{I1}$, $R_{I2}$) is calculated as a function of the set ($Xt$) of the estimated values of instantaneous mass ($m\_t$, $m\_t-1$, $m\_t-2...$).

6. Estimation method according to any one of the preceding claims, in which the interval ($I_1$, $I_2$) within which the total weight ($m$) of the vehicle is situated is determined by comparing the risks ($R_{I1}$, $R_{I2}$) and by choosing the lowest risk ($R_{I1}$, $R_{I2}$).

7. Device for estimating the interval within which the total weight ($m$) of an automobile vehicle is situated, comprising a module (2) for determining at least two intervals of weights ($I_1$, $I_2$), a first situation ($M_{I1}$) in which the total weight ($m$) of the vehicle belongs to the first interval ($I_1$) and a second situation ($M_{I2}$) in which the total weight (m) of the vehicle belongs to the second interval ($I_2$), said estimation device comprising a module (5) for calculating the probabilities ($P(M_{I1}|x)$, $P(M_{I2}|x)$) of being in the first or second situation ($M_{I1}$, $M_{I2}$) knowing a value ($x$) of the weight, a module (8) for calculating the risk ($R_{I1}$, $R_{I2}$) of choosing the wrong interval ($I_1$, $I_2$) as a function of the calculated probabilities and of the cost ($C_{I1}$, $C_{I2}$) associated with an erroneous decision and a module (9) for determining the interval ($I_1$, $I_2$) within which the total weight ($m$) of the vehicle is situated as a function of the risk ($R_{I1}$, $R_{I2}$).

8. Estimation device according to Claim 7, in which the module (5) for calculating the probabilities ($P(M_{I1}|x)$, $P(M_{I2}|x)$) comprises a module (3) for determining a set of estimations of weight ($m\_\#$) using a database (4) containing driving profiles and a calculation module (6) designed to calculate the probability ($P(x|M_{I1})$) that a value ($x$) from the set of weights ($m\_\#$) is situated in the first situation ($M_{I1}$), the probability ($P(x|M_{I2})$) that a value ($x$) from the set of weights ($m\_\#$) is situated in the second situation ($M_{I2}$), the probabilities ($P(M_{I1})$, ($P(M_{I2})$)) of being in the first or second situation ($M_{I1}$, $M_{I2}$) and the probability ($P(x)$) of finding a value ($x$) of weight in all the situations for all the types of driving.

9. Estimation device according to Claim 8, in which the module (5) for calculating the probabilities ($P(M_{I1}|x)$, $P(M_{I2}|x)$) comprises a module for application (7) of an algorithm using the Bayes theorem.

10. Estimation device according to any one of Claims 7 to 9, in which the risk ($R_{I1}$, $R_{I2}$) is calculated as a function of the set ($Xt$) of the estimated values of instantaneous mass ($m\_t$, $m\_t-1$, $m\_t-2...$).

## FIG.1

## FIG.2

## RÉFÉRENCES CITÉES DANS LA DESCRIPTION

**Documents brevets cités dans la description**

- US 6249735 B
- FR 2857090